# EUROPÄISCHE PATENTSCHRIFT

(11) **EP 3 319 913 B1**
(45) Veröffentlichungstag und Bekanntmachung des Hinweises auf die Patenterteilung: **17.06.2020**
(21) Anmeldenummer: 16734687.3
(22) Anmeldetag: 05.07.2016
(51) Int. Cl.: C03C 3/062, C03C 3/066, C03C 3/068, C03C 8/04, C03C 10/00, C04B 35/16, C04B 35/01, C04B 35/626

(54) **KERAMIKEN UND GLASKERAMIKEN MIT NIEDRIGER ODER NEGATIVER THERMISCHER DEHNUNG**
CERAMICS AND GLASS CERAMICS EXHIBITING LOW OR NEGATIVE THERMAL EXPANSION
CÉRAMIQUES ET VITROCÉRAMIQUES PRÉSENTANT UNE DILATATION THERMIQUE BASSE OU NÉGATIVE

(30) Priorität: 06.07.2015 DE 102015110831
(43) Veröffentlichungstag der Anmeldung: 16.05.2018
(73) Patentinhaber: Fraunhofer-Gesellschaft zur Förderung der angewandten Forschung e.V., 80686 München (DE)
(72) Erfinder: THIEME, Christian, 07745 Jena (DE); RÜSSEL, Christian, 07751 Jena (DE)
(74) Vertreter: Patentanwälte Ruff, Wilhelm, Beier, Dauster & Partner mbB
(86) Internationale Anmeldenummer: PCT/EP2016/065876
(87) Internationale Veröffentlichungsnummer: WO 2017/005752

(56) Entgegenhaltungen:
- WO-A1-2014/103973
- WO-A1-2014/157679
- DE-A1-102013 009 001
- US-A- 4 959 330
- US-A1- 2010 009 203
- US-A1- 2015 031 524
- CHRISTIAN THIEME ET AL: "New Family of Materials with Negative Coefficients of Thermal Expansion: The Effect of MgO, CoO, MnO, NiO, or CuO on the Phase Stability and Thermal Expansion of Solid Solution Phases Derived from BaZn 2 Si 2 O 7", INORGANIC CHEMISTRY, Bd. 55, Nr. 9, 2. Mai 2016 (2016-05-02), Seiten 4476-4484, XP055302659, EASTON, US ISSN: 0020-1669, DOI: 10.1021/acs.inorgchem.6b00290
- MARITA KERSTAN ET AL: "Thermal expansion of BaZnSiO, BaZnSiOand the solid solution series BaZnMgSiO(0 2) studied by high-temperature X-ray diffraction and dilatometry", JOURNAL OF SOLID STATE CHEMISTRY, ORLANDO, FL, US, Bd. 188, 26. Januar 2012 (2012-01-26), Seiten 84-91, XP028463710, ISSN: 0022-4596, DOI: 10.1016/J.JSSC.2012.01.055 [gefunden am 2012-02-04] in der Anmeldung erwähnt

## Beschreibung

Die Erfindung betrifft Keramiken und Glaskeramiken mit niedrigen und/oder negativen thermischen Ausdehnungskoeffizienten.

Die meisten Materialien dehnen sich bei einer Temperaturerhöhung aus. Jedoch gibt es einige Materialien, die sich mit zunehmender Temperatur zusammenziehen oder nur sehr wenig ausdehnen. Eines der bekanntesten Beispiele für ein Produkt aus Glaskeramik ohne signifikante thermische Dehnung ist Ceran® der Firma Schott und wird beispielsweise zur Herstellung eines Glaskeramikkochfeldes verwendet. Ein solches Kochfeld enthält die Hauptbestandteile SiO₂, Al₂O₃ und Li₂O. Dabei wird das Ausdehnungsverhalten maßgeblich durch die Kristallisation von niedrig oder negativ dehnenden Lithiumalumosilicaten erzielt. Im relevanten Temperaturbereich besitzen solche Materialien einen thermischen Ausdehnungskoeffizienten nahe null. Selbst zahlreiche thermisch-zyklische Belastungen und Temperaturschocks rufen in solchen Materialien nur sehr geringe thermische Spannungen hervor, die üblicherweise nicht zu mechanischem Versagen, d. h. zum Bruch führen. Von Nachteil ist, dass bei der Herstellung solcher Glaskeramiken sehr hohe Prozesstemperaturen, welche teilweise oberhalb 1600 °C liegen, erzeugt werden müssen.
Solche null-dehnenden Materialien werden außerdem für Präzisionsanwendungen verwendet, wie z. B. großformatige Teleskopspiegel oder aber in der Mikrooptik. Natürlich sind diese Materialien in vielen Anwendungsgebieten denkbar, in denen Thermoschockbeständigkeit über einen mehr oder weniger großen Temperaturbereich gefordert wird, wie z. B. bei Kochgeschirr.
Die bereits erwähnte negative oder sehr geringe thermische Ausdehnung kann durch kristalline Phasen mit niedriger oder negativer Dehnung, wie z. B. β-Spodumen (Hochtemperaturmodifikation von LiAlSi₂O₆), β-Eukryptit (LiAlSiO₄), Cordierit (Mg₂Al₂Si₅O₁₈), Hochquarz- bzw. β-Quarz-Mischkristalle, erreicht werden. Diese sind wohlbekannt und in verschiedenen Artikeln eingehend beschrieben (z. B. in J. N. Grima, V. Zammit, R. Gatt, Xjenza 11, 2006, 17-29 oder in G. D. Barrera, J. A. O. Bruno, T. H. K. Barron, N. L. Allan, J. Phys.: Condens. Matter 17, 2005, R217-R252).
Neben verschiedenen Glaskeramiken hat auch Quarzglas einen sehr niedrigen Ausdehnungskoeffizienten (0,5·10⁻⁶ K⁻¹), welcher durch Dotierung mit TiO₂ weiter gesenkt werden kann. Die Herstellung dieses Materials ist wegen der extrem hohen Schmelztemperaturen (>2200 °C) jedoch schwierig, aufwändig und daher teuer.
Weitere kristalline Phasen mit negativer thermischer Dehnung sind ZrW₂O₈, HfW₂O₈, ZrV₂O₇ und HfV₂O₇, welche in der WO 02/22521 A1 beschrieben werden. Jedoch wurde bislang nicht über Gläser berichtet, aus denen diese Phasen kristallisiert wurden und welche dann einen thermischen Ausdehnungskoeffizienten nahe null besitzen. Zudem sind diese Materialien meist teuer (vor allem im Fall von Wolframverbindungen) und können giftige Komponenten enthalten (Vanadiumverbindungen). Nachfolgend sind weitere Patentschriften aufgeführt, die negativ oder niedrig dehnende Materialien beinhalten.
Die US 5 919 720 A beschreibt verschiedenste Phasen der Form A₂₋ₓ³⁺A_{y}⁴⁺M_{z}³⁺M_{3-y}⁶⁺P_{y}O₁₂, die negative und niedrige Ausdehnungskoeffizienten besitzen. Demnach besitzen beispielsweise ScHoW₃O₁₂ und Al_{1.5}In_{0.5}W₃O₁₂ Ausdehnungskoeffizienten von -7·10⁻⁶ K⁻¹ und 1·10⁻⁶ K⁻¹. Bei diesen Komponenten handelt es sich um Phasen, die beispielsweise über Festkörperreaktionen hergestellt werden können. Die Herstellung von konventionellen Silicat- oder Borosilicatgläsern, aus denen große Mengen dieser Phasen kristallisieren, erscheint jedoch nicht möglich. Es ist daher davon auszugehen, dass diese Phasen nicht aus Gläsern in Volumenkonzentrationen auskristallisiert werden können, die hoch genug wären, einen sehr kleinen thermischen Ausdehnungskoeffizienten im gesamten Werkstoff herbeizuführen.
Generell werden Glaskeramiken mit niedriger Dehnung wie z. B. Ceran® durch Schmelzen und anschließende Kristallisation von Gläsern aus dem System Li₂O-Al₂O₃-SiO₂ hergestellt. Solche Lithiumalumosilicatgläser werden beispielsweise in EP 0 995 723 B1, US RE 29 437 E und DE 39 27 174 A1 beschrieben, die jedoch alle besonders hohe Schmelztemperaturen bedingen.
Bei einigen Patenten sind Erdalkali-Oxide als Zusätze möglich. Jedoch werden diese Oxide nicht zur Beeinflussung der Kristallphase hinzugefügt, sondern lediglich, um die Eigenschaften des Glases zu verändern.
In der DD 142 037 A1 wird ein Lithiumalumosilicatglas beschrieben, in dem BaO zur Verbesserung des Kristallisationsverhaltens und zur Verringerung der Viskosität eingesetzt wird. BaO ist jedoch dafür bekannt, den Ausdehnungskoeffizienten eines Glases deutlich zu erhöhen.

Auch in DE 21 32 788 C werden Gläser beschrieben, die durch den Einbau von bis zu 2 Gew% BaO und/oder CaO sowie bis zu 12 Gew% Selten-Erd-Oxide dotiert sind, die jedoch den Ausdehnungskoeffizienten erhöhen. Die negative Dehnung wird auch hier unter anderem durch Kristalle mit dem gleichen Strukturtyp wie β-Quarz erreicht. Die Hochquarzstruktur wird hier durch Aluminiumoxid sowie ein- (Li₂O, Na₂O) oder zweiwertige (ZnO, MgO) Oxide stabilisiert. Sehr hohe Schmelztemperaturen von 1550 bis 1600 °C werden dabei erwähnt.
In WO 2005/009 916 A1 wird beschrieben, dass sich die negative Dehnung durch die Kristallisation von β-Eukryptit und β-Quarz erreichen lässt. Es dürfen sowohl ZnO als auch BaO und/oder SrO zugegeben werden. Ein Einbau dieser Bestandteile in Kristallphasen wird jedoch nicht erwähnt. In den Ausführungsbeispielen wird eine minimale Schmelztemperatur von 1480 °C angegeben.
Generell lässt sich schlussfolgern, dass Erdalkalioxide wie BaO oder SrO bisher den Gläsern nur zugegeben wurden, um die Schmelztemperatur abzusenken, vielleicht auch um die Neigung zur Kristallisation zu unterdrücken. Dies konnte nur in geringen Mengen erfolgen, da solche Oxide die thermischen Ausdehnungskoeffizienten der Glaskeramiken erhöhen.

Aus der vorangegangenen Übersicht über Veröffentlichungen auf dem Gebiet der niedrig bzw. negativ dehnenden Materialien wird ersichtlich, dass nur eine stark begrenzte Anzahl an kristallinen Phasen bekannt ist, welche im Temperaturbereich T > 20 °C keine oder eine negative thermische Dehnung besitzen. Kommerzielle Anwendung finden dabei hauptsächlich solche Phasen, die sich aus alumosilicatischen Gläsern auskristallisieren lassen. Diese beruhen meist auf dem Li₂O-Al₂O₃-SiO₂-System. Gläser dieses Systems weisen jedoch sehr hohe Schmelztemperaturen, meist deutlich oberhalb von 1550 °C, auf. Dies führt demzufolge zu hohen Energiekosten und insbesondere zu hohem technischen Aufwand.
Alle in der Literatur veröffentlichten Silicatzusammensetzungen mit niedrigem oder negativem thermischen Ausdehnungskoeffizienten sind Alumosilicat-Zusammensetzungen mit den oben aufgezeigten Nachteilen.

Der Erfindung liegt deshalb die Aufgabe zugrunde, eine Möglichkeit aufzuzeigen, durch die mit möglichst geringem Aufwand bei niedriger Schmelztemperatur Keramiken und/oder Glaskeramiken mit niedriger oder aber mit negativer thermischer Dehnung hergestellt werden können.
In dieser Anmeldung soll unter einem sehr niedrigen Ausdehnungskoeffizienten der Bereich zwischen -1·10⁻⁶ K⁻¹ und 1·10⁻⁶ K⁻¹ verstanden werden.

Die Aufgabe wurde erfindungsgemäß durch kristalline Phasen der Form AM₂Si₂O₇ (A = Sr, Ba und M = Zn, Mg, Fe, Ni, Co, Cu, Mn), welche durch konventionelle keramische Verfahren oder durch Kristallisation aus Gläsern hergestellt werden können, gelöst. Die angegebenen Zusammensetzungen bilden feste Lösungen, wobei die als Komponente M angeführten Elemente einander in nahezu beliebiger Konzentration substituieren können. Die Stöchiometrie dieser Silicate sowie ihre Struktur können sich mehr oder weniger stark unterscheiden. Auch kann SiO₂ gegen GeO₂ substituiert werden.

Die Verbindung BaZn₂Si₂O₇ liegt bei Zimmertemperatur als monokline Tieftemperaturphase vor, die sich bei 280 °C in eine orthorhombische Hochtemperaturphase umwandelt (J. H. Lin, G. X. Lu, J. Du, M. Z. Su, C.-K Loong, J. W. Richardson Jr., J. Phys. Chem. Solids 60, 1999, 975-983). Der thermische Ausdehnungskoeffizient der Tieftemperaturphase liegt hierbei sehr hoch, bei 13-16·10⁻⁶ K⁻¹, die Phasenumwandlung ist mit einem Volumenanstieg von 2,8 % verbunden und die Hochtemperaturphase hat dann bei hoher Temperatur, je nach Zusammensetzung, eine sehr kleine oder auch eine negative thermische Ausdehnung (M. Kerstan, M. Müller, C. Rüssel, J. Solid State Chem. 188, 2012, 84-91).
Der Einbau von SrO in Kristalle der Form AM₂Si₂O₇ (A = Ba, Sr und M = vorwiegend Zn, daneben auch Mg, Fe, Ni, Co, Cu, Mn) bewirkt dabei die Stabilisierung der niedrig und/oder negativ dehnenden Hochtemperaturphase, so dass diese auch bei Raumtemperatur stabil ist. Bei der Komponente M sollte Zn stets Hauptbestandteil sein, d. h. der Anteil von Zn an der Komponente M sollte > 50 % betragen. Werden neben SrO größere Konzentrationen an Co, Mg, Fe, Ni, Cu und Mn an Stelle von Zn eingebaut, führt dies zur Stabilisierung von hochdehnenden Phasen mit der Struktur von Tieftemperatur BaZn₂Si₂O₇. Kleinere Konzentrationen an Co, Mg, Fe, Ni, Cu und Mn können jedoch in den Kristall eingebaut werden, ohne dass die Tieftemperaturphase stabilisiert wird. Dies heißt, es wird auch bei Einbau von Co, Mg, Fe, Ni, Cu und Mn die Hochtemperaturphase bei Zimmertemperatur erhalten werden.

Der erfindungsgemäß hergestellte Werkstoff kann einerseits aus Pulvern gesintert werden, wobei die oben beschriebene Ba₁₋ₓSrₓM₂Si₂O₇-Phase die Hauptkristallphase ist. Das zum Sintern verwendete Pulver kann aber eine oder mehrere andere kristalline oder amorphe Phasen enthalten. Die beschriebenen Pulver können durch Festkörperreaktionen z. B. aus Oxiden und Carbonaten hergestellt werden, oder aber durch andere Verfahren, beispielsweise durch Sol-Gel-, Kopräzipitationsverfahren, oder aber mit Hilfe von Gasphasenreaktionen.
Der erfindungsgemäße Werkstoff kann auch durch kontrollierte Kristallisation von Glas erhalten werden. Dies ist möglich, weil die Komponenten der erfindungsgemäßen kristallinen Phasen auch Bestandteil vieler relativ kristallisationsstabiler Gläser sind. Wird zu einer Ba₁₋ₓSrₓM₂Si₂O₇-Zusammensetzung eine nur relativ geringe Menge an SiO₂ gegeben, so kann bereits ein relativ stabiles Glas erhalten werden. Die Stabilität des Glases kann durch Zugabe weiterer Komponenten, wie beispielsweise B₂O₃, La₂O₃ oder ZrO₂ weiter verbessert werden, da diese Komponenten in niedrigen Konzentrationen die Keimbildung in den erfindungsgemäßen chemischen Zusammensetzungen unterdrücken. In höheren Konzentrationen können La₂O₃ oder ZrO₂ aber den gegenteiligen Effekt haben, d. h. Keimbildung und damit Kristallisation hervorrufen und folglich als Keimbildner wirken.
Da die meisten Gläser und Glaskeramiken mit hohen Anteilen an BaO und/oder SrO einen sehr hohen thermischen Ausdehnungskoeffizienten besitzen, kann durch die Variation des BaO/SrO-Verhältnisses der Ausdehnungskoeffizient von Glaskeramiken in weiten Bereichen variiert werden, ohne dass dabei wichtige Glaseigenschaften, wie z. B. die Glasübergangstemperatur oder der Ausdehnungskoeffizient des reinen Glases, maßgeblich verändert werden.
Daneben ist in der Zusammensetzung Ba₁₋ₓSrₓM₂Si₂O₇ auch die Komponente M von erheblicher Bedeutung. Für den Fall M=Zn kann die erfindungsgemäße kristalline Phase stabilisiert werden, sobald ca. 10 mol% des BaO durch SrO ersetzt werden. Der Einbau anderer Komponenten als Zn führt wiederum zur Stabilisierung der hochdehnenden Tieftemperaturphase. Als Komponente M können Ionen folgender zweiwertiger Metalle verwendet werden: Mg, Ni, Co, Fe, Cu, Mn.
Wird zu viel Zn durch andere Komponenten ersetzt, so wird die Tieftemperaturphase stabilisiert, welche einen hohen Ausdehnungskoeffizienten besitzt. Durch diesen Effekt lassen sich Gläser mit annähernd gleichen Eigenschaften herstellen, deren Ausdehnungsverhalten nach einer Kristallisation jedoch beträchtlich variieren kann. Somit stellen diese Glaskeramiken eine Möglichkeit zur gezielten Steuerung des Ausdehnungskoeffizienten in weiten Bereichen dar.

Die Erfindung soll nachstehend anhand von Ausführungsbeispielen näher erläutert werden.

### Ausführungsbeispiel 1

Die in der nachfolgenden Tabelle aufgeführten Zusammensetzungen werden mittels konventionellen keramischen Verfahren (Festphasenreaktion) hergestellt. Dies bedeutet, dass die Ausgangsrohstoffe unterhalb der Liquidustemperatur für 30-50 Stunden getempert werden. Zwischendurch werden die Pulver mehrfach gemahlen und homogenisiert (4- bis 10-mal). Die Phasenreinheit wird mittels Röntgenpulverdiffraktometrie überprüft. Als Rohstoffe werden dabei BaCO₃, SrCO₃, ZnO, SiO₂, GeO₂, MgO, MnCO₃, NiO, Fe(COO)₂·2H₂O, Co₃O₄ und CuO verwendet. Zwei Kristallstrukturen lassen sich dabei stabilisieren. Mittels Röntgenpulverdiffraktometrie wird überprüft, ob die monokline oder orthorhombische Modifikation bei Zimmertemperatur stabil ist. Letztere besitzt die gewünschte negative thermische Ausdehnung. In der Tabelle ist zu sehen, welche der beiden Phasen bei Zimmertemperatur stabil ist. Bei einigen Zusammensetzungen liegen beide Phasen nebeneinander vor. Die eisenhaltigen Proben wurden unter Argonatmosphäre hergestellt.

| Zusammensetzung | orthorhombisch | monoklin | Herstellungstemperatur [°C] | Fremdphasen |
|---|---|---|---|---|
| BaZn₂Si₂O₇ | | x | 1200-1250 | - |
| Ba_{0.96}Sr_{0.04}Zn₂Si₂O₇ | | x | 1200-1250 | - |
| Ba_{0.94}Sr_{0.06}Zn₂Si₂O₇ | | x | 1200-1250 | - |
| Ba_{0.9}Sr_{0.1}Zn₂Si₂O₇ | x | x | 1150-1200 | - |
| Ba_{0.8}Sr_{0.2}Zn₂Si₂O₇ | x | | 1150-1200 | - |
| Ba_{0.5}Sr_{0.5}Zn₂Si₂O₇ | x | | 1200-1250 | - |
| Ba_{0.1}Sr_{0.9}Zn₂Si₂O₇ | x | | 1150-1200 | - |
| Ba_{0.01}Sr_{0.99}Zn₂Si₂O₇ | x | | 1150-1200 | Sr₂ZnSi₂O₇, Zn₂SiO₄ |
| Ba_{0.5}Sr_{0.5}Zn_{1.5}Mg_{0.5}Si₂O₇ | x | | 1250-1300 | - |
| Ba_{0.5}Sr_{0.5}Zn_{1.3}Mg_{0.7}Si₂O₇ | x | x | 1250-1320 | - |
| Ba_{0.5}Sr_{0.5}Zn_{1.5}Co_{0.5}Si₂O₇ | x | | 1250-1300 | - |
| Ba_{0.5}Sr_{0.5}ZnCoSi₂O₇ | | x | 1200-1250 | - |
| Ba_{0.5}Sr_{0.5}Zn_{1.9}Mn_{0.1}Si₂O₇ | | x | 1250-1300 | - |
| Ba_{0.5}Sr_{0.5}Zn_{1.5}Mn_{0.5}Si₂O₇ | x | x | 1150-1200 | - |
| Ba_{0.5}Sr_{0.5}Zn_{1.8}Ni_{0.2}Si₂O₇ | x | | 1150-1200 | - |
| Ba_{0.5}Sr_{0.5}Zn_{1.7}Ni_{0.3}Si₂O₇ | x | x | 1100-1150 | - |
| Ba_{0.5}Sr_{0.5}Zn_{1.6}Ni_{0.4}Si₂O₇ | | x | 1150-1200 | - |
| Ba_{0.5}Sr_{0.5}Zn_{1.9}Cu_{0.1}Si₂O₇ | x | | 1150-1200 | - |
| Ba_{0.5}Sr_{0.5}Zn_{1.7}Cu_{0.3}Si₂O₇ | x | x | 1100-1150 | - |
| Ba_{0.5}Sr_{0.5}Zn_{1.5}Cu_{0.5}Si₂O₇ | | x | 1050-1100 | - |
| Ba_{0.5}Sr_{0.5}Zn₂Si_{1.9}Ge_{0.1}O₇ | x | | 1250-1350 | - |
| Ba_{0.5}Sr_{0.5}Zn_{1.7}Fe_{0.3}Si₂O₇ | x | | 1030-1060 | - |

Pulver, die überwiegend die orthorhombische Modifikation enthalten, zeigen nach vorherigem isostatischen Pressen und anschließendem Sintern negative oder sehr niedrige thermische Ausdehnungskoeffizienten.

### Ausführungsbeispiel 2

Herstellung einer Keramik der Zusammensetzung Ba_{0.2}Sr_{0.8}Zn₂Si₂O₇ mit Hilfe der Acetate sowie kolloidalem SiO₂.

Dafür werden Barium- Strontium- und Zinkacetat in der richtigen Stöchiometrie in deionisiertem Wasser aufgelöst. Zu den gelösten Acetaten wird die entsprechende Menge an kolloidalem SiO₂ mit einer Partikelgröße ≤ 50 nm hinzugegeben. Unter ständigem Rühren wird das Wasser innerhalb eines Tages verdampft, bis eine dickflüssige Masse entsteht. Diese wird getrocknet, mit Hilfe einer Kugelmühle aufgemahlen, mit einer 1-%igen Lösung von Polyvinylalkohol in Wasser vermischt und erneut getrocknet. Anschließend wird das erhaltene Pulver uniaxial verpresst und bei 1130 °C gesintert. Die erhaltene Keramik wird mittels Röntgenpulverdiffraktometrie untersucht. Die Kristallstruktur entspricht der von Hochtemperatur-BaZn₂Si₂O₇, wie sie auch in Ausführungsbeispiel 1 festgestellt wurde. Die Keramik ist phasenrein und zeigt einen linearen thermischen Ausdehnungskoeffizienten von -12 · 10⁻⁶ K⁻¹.

### Ausführungsbeispiel 3

Ein Glas mit der Zusammensetzung 8 BaO · 8 SrO · 34 ZnO · 46 SiO₂ ·1 ZrO₂ · 3 La₂O₃ wird bei einer Temperatur von 1450 °C im Platintiegel erschmolzen. Das Glas zeigt bei dieser Temperatur eine sehr niedrige Viskosität (< 10 Pas). Die Kristallisation einer zylindrischen Probe mit ca. 20 mm Länge und 8 mm Durchmesser bei 900 °C für 5 h ergibt einen linearen thermischen Ausdehnungskoeffizienten von 0,5·10⁻⁶ K⁻¹ (gemessen im Temperaturbereich zwischen 25 und 300 °C).

### Ausführungsbeispiel 4

Ein Glas mit der Zusammensetzung 8 BaO·8 SrO·30 ZnO·5 MgO·45 SiO₂·2 ZrO₂ 2 La₂O₃ wird bei 1400 bis 1450 °C im Platintiegel erschmolzen. Das Glas weist nach fünfstündiger Kristallisation bei 900 °C einen linearen thermischen Ausdehnungskoeffizienten von -2·10⁻⁶ K⁻¹ (gemessen im Temperaturbereich zwischen 25 und 300 °C) auf.

### Ausführungsbeispiel 5

Ein Glas mit der Zusammensetzung 8 BaO·8 SrO·30 ZnO·5 CoO·45 SiO₂·1 ZrO₂·1 La₂O₃·2 B₂O₃ wird bei 1350 bis 1450 °C im Al₂O₃-Tiegel erschmolzen. Nach fünfstündiger Kristallisation bei 900 °C weist die Glaskeramik einen linearen thermischen Ausdehnungskoeffizienten von -2.4·10⁻⁶ K⁻¹ (gemessen im Temperaturbereich zwischen 25 und 300 °C) auf.

### Ausführungsbeispiel 6

Ein Glas mit der Zusammensetzung 8 BaO·8 SrO·34 ZnO·44 SiO₂·1 ZrO₂·1 La₂O₃·4 B₂O₃ wird auf eine mittlere Korngröße ≤ 10 µm zerkleinert. Das so erhaltene Glaspulver wird mit einer 1-%igen Lösung von Polyvinylbutyral in Wasser vermischt und getrocknet. Anschließend wird das Pulver kaltisostatisch mit Hilfe einer Silikonform verpresst. Der Pressling wird schließlich bei 900 °C für 5 h gesintert. Während des Aufheizens wird das Pulver durch viskoses Fließen verdichtet, anschließend kristallisiert das Glas. Im Temperaturbereich zwischen 100 und 500 °C ergibt sich ein linearer thermischer Ausdehnungskoeffizient von 4.1·10⁻⁶ K⁻¹.

### Ausführungsbeispiel 7

Ein Glas mit der Zusammensetzung 7.5 BaO·7.5 SrO·32 ZnO·47 SiO₂·5 ZrO₂·1 La₂O₃ wird bei 1350 bis 1450 °C erschmolzen. Die Glasübergangstemperatur liegt bei 695 °C. Die Kristallisation bei 815 °C für 20 h führt zur Bildung von Kristallen der Zusammensetzung Ba_{0.5}Sr_{0.5}Zn₂Si₂O₇. Kleine Mengen an ZrO₂ kristallisieren außerdem. Dieses wirkt dabei als Keimbildner. Die bei 815 °C kristallisierten Gläser besitzen einen linearen thermischen Ausdehnungskoeffizienten von -2.1·10⁻⁶ K⁻¹.

### Ausführungsbeispiel 8

Eine Keramik mit der Zusammensetzung Sr_{0.5}Ba_{0.5}Zn_{1.9}Ni_{0.1}Si₂O₇ wird über eine Festphasenreaktion hergestellt. Dafür werden die entsprechenden Mengen BaCO₃, SrCO₃, ZnO, NiO und SiO₂ in Ethanol aufgeschlämmt und anschließend in einer Planetenmühle auf eine mittlere Partikelgröße < 3 µm gemahlen. Das Gemisch aus Ausgangsstoffen und Ethanol wird anschließend für 3 h bei 110 °C getrocknet. Das so entstandene Pulver wird durch eine Temperaturbehandlung bei 1200 °C für 10 h in die entsprechende nahezu phasenreine Keramik umgewandelt. Die Keramik wird anschließend erneut auf eine mittlere Partikelgröße < 3 µm gemahlen und uniaxial verpresst. Anschließend wird der Pressling bei 1200 °C für 10 h gesintert. Die dilatometrische Messung zeigt einen Ausdehnungskoeffizienten von -19,3·10⁻⁶ K⁻¹ im Temperaturbereich zwischen 100 und 300 °C.

### Ausführungsbeispiel 9

Ein Glas mit der Zusammensetzung 8BaO 8SrO 30ZnO 5MgO 45SiO₂ 3B₂O₃ wird bei 1350 °C im Platintiegel erschmolzen. Dafür werden die Rohstoffe BaCO₃, SrCO₃, ZnO, MgO, SiO₂, und H₃BO₃ verwendet. Das Glas wird in eine auf 700 °C vorgewärmte Stahlform gegossen und anschließend in einen Kühlofen, der ebenfalls auf 700 °C vorgewärmt wurde, überführt und anschließend mit 2K/min abgekühlt. Durch die Kristallisation des Glasblockes im Temperaturbereich zwischen 700 und 780 °C wird eine Glaskeramik hergestellt, die eine thermische Ausdehnung nahe null, gemessen im Temperaturbereich zwischen Raumtemperatur und 650 °C, besitzt. Dieser kann somit als Trägermaterial für optische Bauelemente verwendet werden.

## Patentansprüche

1. Material auf der Basis einer Kristallphase mit Zusammensetzung Ba₁₋ₓSrₓM₂Si_{2-y}Ge_{y}O₇ mit 0 < x < 1 und 0 ≤ y ≤ 2, wobei M mindestens Zn als Bestandteil aus einer Gruppe, enthaltend Zn, Mg, Mn, Co, Ni, Fe und Cu, ausgewählt ist, so dass das Material einen negativen oder einen linearen thermischen Ausdehnungskoeffizienten < 1·10⁻⁶ K⁻¹ aufweist.

2. Material nach Anspruch 1, **dadurch gekennzeichnet, dass** die Kristallphase eine Zusammensetzung besitzt, bei der M mindestens einen weiteren Bestandteil aus der Gruppe Zn, Mg, Mn, Co, Ni, Fe und Cu enthält und die Summe der Konzentrationen dieser weiteren Bestandteile nicht die Zn-Konzentration übersteigt.

3. Material nach den Ansprüchen 1 bis 2, **dadurch gekennzeichnet, dass** die Kristallphase die Hauptphase ist, wobei diese in einer Volumenkonzentration von >50% vorliegt und andere vorliegende Phasen andere Kristallphasen oder aber eine oder auch mehrere Glasphasen unterschiedlicher chemischer Zusammensetzung sind.

4. Material nach den Ansprüchen 1 bis 3, **dadurch gekennzeichnet, dass** die Kristallphase aus einem Glas auskristallisiert ist.

5. Verwendung des Materials nach Anspruch 1 zur Herstellung von Glaskeramik oder Keramik.

6. Glaskeramik nach Anspruch 4, **dadurch gekennzeichnet, dass** das Glas, aus dem die Kristallphase kristallisiert wird, folgende Bestandteile enthält:
2-30 mol% SrO
1-25 mol% BaO
wobei SrO + BaO 6 bis 30 mol% beträgt
30-60 mol% SiO₂
30-60 mol% GeO₂
wobei SiO₂+GeO₂ 30-60 mol% beträgt
0-30 mol% B₂O₃
15-44 mol% MO (mit M= Zn, Mg, Mn, Fe, Co, Ni, Cu oder Mischungen hiervon)
0-12 mol% M'₂O (mit M'= Li, Na, K oder Mischungen hiervon)
0-4 mol% M"₂O₃ (mit M"= Bi, Sc, Y, La oder einem Oxid der Seltenen Erden)
0-10 mol% M'''O₂ (mit M'''= Ti, Zr)
0-7 mol% M''''₂O₅ (mit M""= Sb, Nb oder Ta oder Mischungen hiervon).

7. Herstellung eines Materials nach den Ansprüchen 1 bis 4, **dadurch gekennzeichnet, dass** das Material aus amorphen Pulvern durch einen Sinterprozess hergestellt wird, wobei die Verdichtung durch viskoses Fließen eintritt, bevor am Ende des Sinterprozesses die Kristallisation der Kristallphase eintritt.

8. Herstellung eines Materials nach den Ansprüchen 1 bis 3, **dadurch gekennzeichnet, dass** das Material aus kristallinen Pulvern, die die Kristallphase enthalten, durch einen Sinterprozess nach den in der keramischen Technologie üblichen Prozessen hergestellt wird.

9. Verwendung des Materials nach Anspruch 1 als Werkstoff niedriger Wärmedehnung zur Herstellung von Ofenfenstern oder glaskeramischen oder keramischen Kochfeldern.

10. Verwendung des Materials nach Anspruch 1 als Werkstoff niedriger Wärmedehnung zur Herstellung von Kochgeschirr.

11. Verwendung des Materials nach Anspruch 1 als Werkstoff niedriger Wärmedehnung für Anwendungen in der Mikromechanik.

12. Verwendung des Materials nach Anspruch 1 als Werkstoff niedriger Wärmedehnung zur Herstellung von Teleskopspiegeln oder anderen passiven Elementen für optische Technologien.

13. Verwendung des Materials nach Anspruch 1 als Werkstoff zum Fügen von Materialien mit niedrigen thermischen Ausdehnungskoeffizienten, wie beispielsweise Gläsern mit SiO₂-Konzentrationen >98 %, Borosilicatgläsern oder Glaskeramiken auf der Basis von Lithiumalumosilicat mit einer thermischen Ausdehnung von nahezu null.

14. Verwendung des Materials nach Anspruch 1 zum Glasieren von Materialien mit niedrigen thermischen Ausdehnungskoeffizienten, wie beispielsweise Gläsern mit SiO₂-Konzentrationen >98 %, Borosilicatgläsern oder Glaskeramiken auf der Basis von Lithiumalumosilicat mit einer thermischen Ausdehnung von nahezu null.

## Claims

1. Material based on a crystal phase having the composition Ba₁₋ₓSrₓM₂Si_{2-y}Ge_{y}O₇ with 0 < x < 1 and 0 ≤ y ≤ 2, where M has at least Zn as constituent and is selected from a group consisting of Zn, Mg, Mn, Co, Ni, Fe and Cu, in such a way that the material has a negative coefficient of thermal expansion or a coefficient of linear thermal expansion of < 1·10⁻⁶ K⁻¹.

2. Material according to claim 1, **characterized in that** the crystal phase has a composition in which M contains at least one further constituent from the group consisting of Zn, Mg, Mn, Co, Ni, Fe and Cu and the sum of the concentrations of these further constituents does not exceed the concentration of Zn.

3. Material according to claim 1 or 2, **characterized in that** the crystal phase is the main phase, with this being present in a volume concentration of > 50% and other phases present being other crystal phases or else one or more glass phases of differing chemical composition.

4. Material according to any of claims 1 to 3, **characterized in that** the crystal phase has been crystallized from a glass.

5. Use of the material according to claim 1 for producing glass-ceramic or ceramic.

6. Glass-ceramic according to claim 4, **characterized in that** the glass from which the crystal phase is crystallized contains the following constituents:
2-30 mol% of SrO,
1-25 mol% of BaO,
where SrO + BaO is from 6 to 30 mol%,
30-60 mol% of SiO₂,
30-60 mol% of GeO_{2,}
where SiO₂+GeO₂ is from 30-60 mol%,
0-30 mol% of B₂O_{3,}
15-44 mol% of MO (where M= Zn, Mg, Mn, Fe, Co, Ni, Cu or mixtures thereof),
0-12 mol% of M'₂O (where M'= Li, Na, K or mixtures thereof),
0-4 mol% of M"₂O₃ (where M"= Bi, Sc, Y, La or an oxide of the rare earths),
0-10 mol% of M'''O₂ (where M'''= Ti, Zr),
0-7 mol% of M''''₂O₅ (where M""= Sb, Nb or Ta or mixtures thereof).

7. Production of a material according to claims 1 to 4, **characterized in that** the material is produced from amorphous powders by means of a sintering process, with densification by viscose flow commencing before crystallization of the crystal phase occurs at the end of the sintering process.

8. Production of a material according to any of claims 1 to 3, **characterized in that** the material is produced from crystalline powders which contain the crystal phase by means of a sintering process according to the processes customary in ceramic technology.

9. Use of the material according to claim 1 as material having low thermal expansion for producing oven windows or glass-ceramic or ceramic cooking areas.

10. Use of the material according to claim 1 as material having low thermal expansion for producing cookware.

11. Use of the material according to claim 1 as material having low thermal expansion for applications in micromechanics.

12. Use of the material according to claim 1 as material having low thermal expansion for producing telescope mirrors or other passive elements for optical technologies.

13. Use of the material according to claim 1 as material for joining materials having low coefficients of thermal expansion, for example glasses having SiO₂ concentrations of > 98%, borosilicate glasses or glass-ceramics based on lithium aluminosilicate having a thermal expansion of virtually zero.

14. Use of the material according to claim 1 for glazing materials having low coefficients of thermal expansion, for example glasses having SiO₂ concentrations of > 98%, borosilicate glasses or glass-ceramics based on lithium aluminosilicate having a thermal expansion of virtually zero.

## Revendications

1. Matériau à base d'une phase cristalline ayant la composition Ba₁₋ₓSrₓM₂Si_{2-y}Ge_{y}O₇ avec 0 < x < 1 et 0 ≤ y ≤ 2, où M comporte au moins Zn en tant que constituant sélectionné d'un groupe comprenant Zn, Mg, Mn, Co, Ni, Fe et Cu, de telle manière que le matériau présente un coefficient d'expansion thermique négatif ou linéaire de < 1·10⁻⁶K⁻¹.

2. Matériau selon la revendication 1, **caractérisé en ce que** la phase cristalline présente une composition, où M comporte au moins un autre constituant du groupe Zn, Mg, Mn, Co, Ni, Fe et Cu et la somme des concentrations desdits autres constituants ne dépasse pas la concentration en Zn.

3. Matériau selon la revendication 1 ou 2, **caractérisé en ce que** la phase cristalline est la phase principale, ladite phase étant présente en une concentration par volume de > 50% et d'autres phases présentes étant autres phases cristallines ou encore une ou plusieurs phases vitreuses de composition chimique différente.

4. Matériau selon les revendications 1 à 3, **caractérisé en ce que** la phase cristalline est cristallisée à partir d'un verre.

5. Utilisation du matériau selon la revendication 1 pour la production de vitrocéramiques ou céramiques.

6. Vitrocéramique selon la revendication 4, **caractérisée en ce que** le verre, à partir duquel la phase cristalline est cristallisée, comprend les constituants suivants :
2-30 mol% de SrO
1-25 mol% de BaO
où SrO + BaO est de 6 à 30 mol%
30-60 mol% de SiO
30-60 mol% de GeO₂
où SiO₂+GeO₂ est de 30-60 mol%
0-30 mol% de B₂O₃
15-44 mol% de MO (où M= Zn, Mg, Mn, Fe, Co, Ni, Cu ou mélanges de ceux-ci)
0-12 mol% de M'₂O (où M'= Li, Na, K ou mélanges de ceux-ci)
0-4 mol% de M"₂O₃ (où M"= Bi, Sc, Y, La ou un oxyde de terres rares)
0-10 mol% de M'''O₂ (où M'''= Ti, Zr)
0-7 mol% de M''''₂O₅ (où M""= Sb, Nb ou Ta ou mélanges de ceux-ci).

7. Production d'un matériau selon les revendications 1 à 4, **caractérisée en ce que** le matériau est produit à partir de poudres amorphes par un procédé de frittage, dans lequel une densification par écoulement visqueux commence avant que la cristallisation de la phase cristalline commence à la fin du procédé de frittage.

8. Production d'un matériau selon les revendications 1 à 3, **caractérisée en ce que** le matériau est produit à partir de poudres cristallines, qui contiennent la phase cristalline, par un procédé de frittage selon les procédés d'usage dans la technologie céramique.

9. Utilisation du matériau selon la revendication 1 en tant que matière d'expansion thermique faible pour la production de fenêtres de four ou de tables de cuisson vitrocéramiques ou céramiques.

10. Utilisation du matériau selon la revendication 1 en tant que matière d'expansion thermique faible pour la production d'ustensiles de cuisine.

11. Utilisation du matériau selon la revendication 1 en tant que matière d'expansion thermique faible pour des applications micromécaniques.

12. Utilisation du matériau selon la revendication 1 en tant que matière d'expansion thermique faible pour la production de miroirs de télescope ou d'autres éléments passifs pour des technologies optiques.

13. Utilisation du matériau selon la revendication 1 en tant que matière pour l'assemblage de matériaux d'un coefficient d'expansion thermique faible, comme par exemple verres à concentrations en SiO₂ de > 98%, verres borosilicate ou vitrocéramiques à base d'aluminosilicate de lithium présentant une expansion thermique presque nulle.

14. Utilisation du matériau selon la revendication 1 pour la vitrification de matériaux d'un coefficient d'expansion thermique faible, comme par exemple verres à concentrations en SiO₂ de > 98%, verres borosilicate ou vitrocéramiques à base d'aluminosilicate de lithium présentant une expansion thermique presque nulle.
